# DEMANDE DE BREVET EUROPEEN

(11) **EP 4 814 324 A1**
(43) Date de publication de la demande: **30.09.2026**
(21) Numéro de dépôt: 26156236.7
(22) Date de dépôt: 04.02.2026
(51) Int. Cl.: F16B 19/10, F16B 31/02

(54) **DISPOSITIF DE FIXATION AVEUGLE APTE À ÊTRE RESSERRÉ APRÈS INSTALLATION, ET PROCÉDÉ D'INSTALLATION D'UN TEL DISPOSITIF DE FIXATION AVEUGLE**

(30) Priorité: 24.03.2025 FR 2503011
(71) Demandeur: Airbus Operations S.A.S., 31060 Toulouse (FR)
(72) Inventeur: CARON, Alexandre, TOULOUSE (FR)
(74) Mandataire: Airbus-OPS SAS

(57) **Abrégé**

Dispositif de fixation aveugle apte à être resserré après installation, et Procédé d'installation d'un tel dispositif de fixation aveugle.

Un dispositif de fixation aveugle (10) pour la fixation d'un assemblage comprenant une tige d'actionnement (18) comportant une douille de déformation (18d), et un manchon (20) comprenant une douille de déformation (20d) et une portion déformable (20e) configurée pour se déformer radialement lorsque les douilles de déformation (18d, 20d) coopèrent. La tige d'actionnement (18) comprend un premier écrou d'entraînement (18e) suivi d'une première gorge de rupture (18f) configurée pour se rompre lorsqu'un couple de serrage appliqué sur le premier écrou d'entraînement (18e) dépasse un premier couple prédéterminé, et un deuxième écrou d'entraînement (18g) suivi d'une deuxième gorge de rupture (18h) configurée pour se rompre lorsqu'un couple de re-serrage appliqué sur le deuxième écrou d'entraînement (18g) dépasse un deuxième couple prédéterminé supérieur audit premier couple prédéterminé.

Ce dispositif de fixation aveugle peut être re-serré après son installation.

## Description

### DOMAINE TECHNIQUE

La présente demande se rapporte à un dispositif de fixation aveugle conçu pour permettre un resserrage de la fixation après installation, ainsi qu'à un procédé d'installation d'un tel dispositif de fixation aveugle.

### ÉTAT DE LA TECHNIQUE ANTÉRIEURE

Des dispositifs de fixation aveugle sont actuellement utilisés, notamment dans le domaine de l'aéronautique, pour assembler des éléments entre eux, lorsque l'opérateur en charge de l'assemblage desdits éléments n'a accès qu'à un seul côté de l'assemblage. Ces dispositifs de fixation aveugle tendent à être utilisés plus largement dans le futur, car ils sont l'un des éléments clés de l'automatisation d'une ligne d'assemblage.

Entre les éléments à assembler, un joint d'étanchéité d'interface est souvent appliqué, de manière à ce que l'assemblage soit étanche aux fluides (étanchéité à l'eau, ainsi qu'à l'air pour la pressurisation de la cabine d'aéronef par exemple), afin d'éviter de potentielles fuites, telles que des fuites de carburant, et de manière à prévenir la corrosion de l'un ou l'autre des éléments composant l'assemblage lorsque des matériaux différents composent les éléments assemblés (par exemple lorsque l'un des éléments est réalisé en polymère renforcé de fibres de carbone (CFRP, acronyme de "carbon fiber reinforced polymer")).

Le joint d'étanchéité d'interface est généralement appliqué avant les étapes d'assemblage final permettant d'assembler un premier élément à un deuxième élément.

Suite à l'application du joint d'étanchéité d'interface, il est nécessaire de maintenir une pression prédéterminée sur l'assemblage, le temps de fluage et de séchage du joint d'étanchéité d'interface, et ce afin d'assurer l'étanchéité totale de la structure assemblée.

Afin de garantir un pressage correct du joint d'étanchéité d'interface, il est nécessaire d'utiliser des dispositifs de fixation temporaires. Cette méthode consiste en l'installation de dispositifs de fixation temporaires pour assembler les éléments, en l'application de la pression nécessaire sur l'assemblage, afin d'assurer un pré-serrage de l'assemblage et de garantir une homogénéité de l'épaisseur du joint à l'interface entre les premier et deuxième éléments assemblés, et en un remplacement des dispositifs de fixation temporaires par des dispositifs de fixation définitifs, les dispositifs de fixation définitifs étant correctement serrés pour assurer un contact correct et un effort de serrage suffisant entre les éléments à assembler. Cette méthode est toutefois coûteuse, en termes de temps et de matériaux, puisqu'il est nécessaire d'installer et de retirer de nombreux dispositifs de fixation temporaires.

Afin de se passer de dispositifs de fixations temporaires, il serait nécessaire d'utiliser des dispositifs de fixation définitifs qui puissent être resserrés après le pressage et séchage du joint d'étanchéité. Un premier serrage des dispositifs de fixation définitifs permettrait d'assurer le pressage du joint d'étanchéité d'interface, et un second serrage (i.e. un resserrage) des dispositifs de fixation définitifs permettrait d'assurer une précharge correcte des dispositifs de fixation définitifs après le pressage du joint d'étanchéité, et d'assurer un contact intime entre les éléments à assembler. Toutefois, ce type de dispositif de fixation aveugle n'existe pas à ce jour, les dispositifs de fixation aveugle existants n'étant pas conçus pour être resserrés.

Il existe donc un besoin pour un dispositif de fixation aveugle pour assembler des éléments entre eux de manière à former un assemblage, qui puisse être serré une première fois, et resserré par la suite.

### RÉSUMÉ DE L'INVENTION

La présente invention vise à proposer une solution permettant un re-serrage d'un dispositif de fixation aveugle après son installation.

A cet effet, l'invention a pour objet un dispositif de fixation aveugle pour la fixation d'un assemblage d'un premier élément avec un deuxième élément, un joint d'étanchéité d'interface étant disposé entre lesdits premier et deuxième éléments, lesdits premier et deuxième éléments comprenant chacun un orifice présentant un premier diamètre intérieur, ledit dispositif de fixation aveugle comprenant:
- une tige d'actionnement présentant des première et deuxième extrémités, et comprenant un premier écrou d'entraînement à sa première extrémité, une première gorge de rupture entre le premier écrou d'entraînement et sa deuxième extrémité, une portion filetée entre la première gorge de rupture et sa deuxième extrémité, et une douille de déformation au niveau de sa deuxième extrémité,
- un manchon apte à être inséré dans les orifices desdits premier et deuxième éléments, et présentant un premier diamètre extérieur sensiblement égal au premier diamètre intérieur, le manchon étant apte à être enfilé sur la tige d'actionnement, et présentant des première et deuxième extrémités, et comprenant une portion taraudée entre ses première et deuxième extrémités, une douille de déformation à sa deuxième extrémité et une portion déformable entre ses première et deuxième extrémités configurée pour se déformer radialement jusqu'à ce que le manchon présente un deuxième diamètre extérieur supérieur au premier diamètre extérieur lorsque la douille de déformation de la tige d'actionnement coopère avec la douille de déformation du manchon,
dans lequel ladite première gorge de rupture est configurée pour se rompre lorsqu'un couple de serrage appliqué sur le premier écrou d'entraînement entraînant la coopération de la portion filetée de la tige d'actionnement avec la portion taraudée du manchon dépasse un premier couple prédéterminé.

Selon l'invention, la tige d'actionnement comprend un deuxième écrou d'entraînement suivi d'une deuxième gorge de rupture entre la première gorge de rupture et la portion filetée, ladite deuxième gorge de rupture étant configurée pour se rompre lorsqu'un couple de re-serrage appliqué sur le deuxième écrou d'entraînement dépasse un deuxième couple prédéterminé supérieur audit premier couple prédéterminé.

Avantageusement, la présence du deuxième écrou d'entraînement suivi de la deuxième gorge de rupture permet d'introduire une fonction de re-serrage du dispositif de fixation aveugle, et plus précisément de la tige d'actionnement dans le manchon, après pressage du joint d'étanchéité d'interface entre les premier et deuxième éléments de l'assemblage. En outre, la deuxième gorge de rupture étant calibrée pour un couple de serrage prédéterminé, un re-serrage correct du dispositif de fixation aveugle est garanti, et tout sous-serrage ou sur-serrage du dispositif de fixation aveugle est ainsi évité.

Selon une autre caractéristique, la douille de déformation de la tige d'actionnement prend la forme d'un filetage et la douille de déformation du manchon prend la forme d'un taraudage. Selon une autre caractéristique, la douille de déformation de la tige d'actionnement prend la forme d'une excroissance radiale et la douille de déformation du manchon prend la forme d'une expansion radiale.

Selon une autre caractéristique, la douille de déformation de la tige d'actionnement prend la forme d'une excroissance radiale et la douille de déformation du manchon prend la forme d'une surface d'appui contre laquelle s'appuie la douille de déformation de la tige d'actionnement. L'invention a également pour objet un procédé d'installation d'un dispositif de fixation aveugle selon l'invention pour la fixation de l'assemblage du premier élément avec le deuxième élément, comprenant:
- une étape d'insertion du dispositif de fixation aveugle dans les orifices des premier et deuxième éléments,
- une étape de coopération de la douille de déformation de la tige d'actionnement avec la douille de déformation du manchon de manière à déformer radialement la portion déformable du manchon jusqu'à ce que le manchon présente un deuxième diamètre extérieur supérieur au premier diamètre extérieur, la coopération de la douille de déformation de la tige d'actionnement avec la douille de déformation du manchon permettant d'agencer la portion filetée de la tige d'actionnement en regard de la portion taraudée du manchon,
- une étape de vissage de la portion filetée de la tige d'actionnement dans la portion taraudée du manchon, via le premier écrou d'entraînement, jusqu'à rupture de la première gorge de rupture.

Selon l'invention, le procédé comprend également:
- une étape de re-serrage de la portion filetée de la tige d'actionnement dans la portion taraudée du manchon, via le deuxième écrou d'entraînement, jusqu'à rupture de la deuxième gorge de rupture.

Avantageusement, l'installation d'un tel dispositif de fixation permet d'éviter l'utilisation de dispositifs de fixation aveugle temporaires, et permet donc l'utilisation directe de dispositifs de fixation aveugle définitifs, qui sont re-serrés après installation et pressage du joint d'étanchéité d'interface agencé entre les premier et deuxième éléments de l'assemblage.

Selon une autre caractéristique, la douille de déformation de la tige d'actionnement prend la forme d'un filetage et la douille de déformation du manchon prend la forme d'un taraudage, et l'étape de coopération de la douille de déformation de la tige d'actionnement avec la douille de déformation du manchon comporte une sous-étape de vissage de la douille de déformation de la tige d'actionnement dans la douille de déformation du manchon de manière à ce que le filetage de la douille de déformation de la tige d'actionnement coopère avec le taraudage de la douille de déformation du manchon.

Selon une autre caractéristique, la douille de déformation de la tige d'actionnement prend la forme d'une excroissance radiale et la douille de déformation du manchon prend la forme d'une expansion radiale, et l'étape de coopération de la douille de déformation de la tige d'actionnement avec la douille de déformation du manchon comporte une sous-étape de traction de la douille de déformation de la tige d'actionnement dans la douille de déformation du manchon de manière à ce que l'excroissance radiale de la douille de déformation de la tige d'actionnement coopère avec l'expansion radiale de la douille de déformation du manchon.

Selon une autre caractéristique, la douille de déformation de la tige d'actionnement prend la forme d'une excroissance radiale et la douille de déformation du manchon prend la forme d'une surface d'appui, et l'étape de coopération de la douille de déformation de la tige d'actionnement avec la douille de déformation du manchon comporte une sous-étape de traction de la douille de déformation de la tige d'actionnement dans la douille de déformation du manchon de manière à ce que l'excroissance radiale de la douille de déformation de la tige d'actionnement coopère avec la surface d'appui de la douille de déformation du manchon.

L'invention a également pour objet un assemblage d'un premier élément et d'un deuxième élément comprenant un dispositif de fixation aveugle selon l'invention, ledit dispositif de fixation aveugle étant agencé pour fixer ledit premier élément audit deuxième élément.

L'invention a également pour objet un aéronef comprenant au moins un assemblage selon l'invention.

### BRÈVE DESCRIPTION DES DESSINS

D'autres caractéristiques et avantages ressortiront de la description de l'invention qui va suivre, description donnée à titre d'exemple uniquement, en regard des dessins annexés parmi lesquels :
Fig. 1 est une vue en coupe d'un dispositif de fixation aveugle non assemblé et de premier et deuxième éléments à assembler, qui illustre une étape d'un premier mode de réalisation de l'invention,
Fig. 2 est une vue en coupe d'un dispositif de fixation aveugle assemblé et de premier et deuxième éléments à assembler, qui illustre une autre étape d'un premier mode de réalisation de l'invention,
Fig. 3 est une vue en coupe d'un dispositif de fixation aveugle et d'un assemblage de premier et deuxième éléments, qui illustre une autre étape d'un premier mode de réalisation de l'invention,
Fig. 4 est une vue en coupe d'un dispositif de fixation aveugle fixé dans un assemblage de premier et deuxième éléments, qui illustre une autre étape d'un premier mode de réalisation de l'invention,
Fig. 5 est une vue en coupe d'un dispositif de fixation aveugle re-serré dans un assemblage de premier et deuxième éléments, qui illustre une autre étape d'un premier mode de réalisation de l'invention,
Fig. 6 est un organigramme d'un procédé d'installation d'un dispositif de fixation aveugle pour la fixation d'un assemblage d'un premier élément avec un deuxième élément, qui illustre un mode de réalisation de l'invention,
Fig. 7 est une vue en coupe d'un dispositif de fixation aveugle non assemblé et de premier et deuxième éléments à assembler, qui illustre une étape d'un deuxième mode de réalisation de l'invention,
Fig. 8 est une vue en coupe d'un dispositif de fixation aveugle assemblé et de premier et deuxième éléments à assembler, qui illustre une autre étape d'un deuxième mode de réalisation de l'invention,
Fig. 9 est une vue en coupe d'un dispositif de fixation aveugle et d'un assemblage de premier et deuxième éléments, qui illustre une autre étape d'un deuxième mode de réalisation de l'invention,
Fig. 10 est une vue en coupe d'un dispositif de fixation aveugle re-serré dans un assemblage de premier et deuxième éléments, qui illustre une autre étape d'un deuxième mode de réalisation de l'invention,
Fig. 11 est une vue en coupe d'un dispositif de fixation aveugle non assemblé et de premier et deuxième éléments à assembler, qui illustre une étape d'un troisième mode de réalisation de l'invention,
Fig. 12 est une vue en coupe d'un dispositif de fixation aveugle assemblé et de premier et deuxième éléments à assembler, qui illustre une autre étape d'un troisième mode de réalisation de l'invention,
Fig. 13 est une vue en coupe d'un dispositif de fixation aveugle et d'un assemblage de premier et deuxième éléments, qui illustre une autre étape d'un troisième mode de réalisation de l'invention, et
Fig. 14 est une vue en perspective d'un aéronef comprenant un assemblage de premier et deuxième éléments, qui illustre un mode de réalisation de l'invention.

### DESCRIPTION DÉTAILLÉE DE L'INVENTION

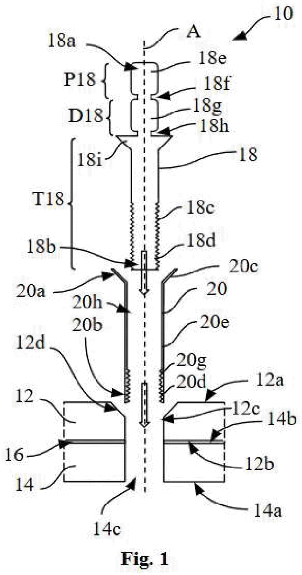

Les Figures 1 à 5 représentent l'installation d'un premier type de fixation aveugle pour fixer ensemble des éléments d'un aéronef: un dispositif de fixation aveugle par serrage, dit dispositif de fixation aveugle "à serrer".

Comme illustré sur les Figures 1 à 5, le dispositif de fixation aveugle 10 est utilisé pour fixer deux éléments 12, 14 l'un à l'autre. Le dispositif de fixation aveugle 10 est utilisé ici pour assembler un premier élément 12, situé du côté accessible de l'assemblage pour un opérateur, et un deuxième élément 14, situé du côté inaccessible de l'assemblage lorsque les éléments 12, 14 sont fixés l'un à l'autre.

Le premier élément 12 comporte ainsi une première face 12a agencée du côté accessible de l'assemblage, et une deuxième face 12b agencée en regard du deuxième élément 14. Le deuxième élément comporte une première face 14a agencée du côté inaccessible de l'assemblage, et une deuxième face 14b agencée en regard du premier élément 12. Un joint d'étanchéité d'interface 16 est présent entre les premier et deuxième éléments 12, 14, et notamment entre les deuxièmes faces 12b, 14b des éléments 12, 14.

Chaque élément 12, 14 comporte un orifice 12c, 14c traversant, dans lequel le dispositif de fixation est destiné à être inséré. Ces orifices 12c, 14c sont coaxiaux, selon l'axe longitudinal A comme représenté sur la Figure 1. Ici, les orifices 12c, 14c sont de forme sensiblement cylindrique à base circulaire. L'orifice 12c présente un élargissement 12d au niveau de la première face 12a de l'élément 12 contre lequel le dispositif de fixation aveugle 10 va s'appuyer.

Le dispositif de fixation aveugle 10 comporte une tige d'actionnement 18, ici une tige de serrage, ainsi qu'un manchon 20 recevant la tige d'actionnement 18 et destiné à être placé dans les orifices 12c, 14c des éléments 12, 14 à fixer l'un à l'autre.

La tige d'actionnement 18 comporte un corps s'étendant longitudinalement selon l'axe longitudinal A et ayant une première extrémité 18a agencée du côté accessible de l'assemblage et une deuxième extrémité 18b opposée à la première extrémité 18a et agencée du côté inaccessible de l'assemblage lorsque la tige d'actionnement 18 est insérée dans le manchon 20, lui-même étant placé dans les orifices 12c, 14c des éléments 12, 14 à assembler. La tige d'actionnement 18 comporte une portion filetée 18c entre ses première et deuxième extrémités 18a, 18b, ainsi qu'une douille de déformation 18d à sa deuxième extrémité 18b. Ici, la douille de déformation 18d prend la forme d'un filetage. La tige d'actionnement comporte également un premier écrou d'entraînement 18e à sa première extrémité 18a, qui est séparé du corps de la tige d'actionnement 18 par une première gorge de rupture 18f. La première gorge de rupture 18f est donc à distance de la première extrémité 18a de la tige d'actionnement 18, et permet de définir une première portion P18 de la tige d'actionnement 18 comportant également, à la première extrémité 18a, le premier écrou d'entraînement 18e. La tige d'actionnement 18 comporte également un deuxième écrou d'entraînement 18g entre la première gorge de rupture 18f et le corps de la tige d'actionnement 18, à distance de la deuxième extrémité 18b de la tige d'actionnement 18. Ce deuxième écrou d'entraînement 18g est séparé du corps de la tige d'actionnement 18 par une deuxième gorge de rupture 18h. Le deuxième écrou d'entraînement 18g est ainsi agencé entre les première et deuxième gorges de rupture 18f, 18h. Une deuxième portion D18 de la tige d'actionnement 18 est ainsi définie, et comporte le deuxième écrou d'entraînement 18g et la deuxième gorge de rupture 18h. De préférence, le deuxième écrou d'entraînement 18g est identique au premier écrou d'entraînement 18e, afin qu'un opérateur puisse utiliser le même outil de serrage pour les premier et deuxième écrous d'entraînement 18e, 18g. Bien entendu, ces premier et deuxième écrous d'entraînement 18e, 18g peuvent être différents. La tige d'actionnement 18 comporte une collerette 18i cylindrique agencée entre la deuxième gorge de rupture 18h et le corps de la tige d'actionnement 18, à distance de la deuxième extrémité 18b de la tige d'actionnement 18. La collerette 18i forme une excroissance radiale (i.e. dans une direction radiale à l'axe longitudinal A) depuis le corps de la tige d'actionnement 18. La collerette 18i a une forme sensiblement complémentaire à la forme de l'élargissement 12d de l'orifice 12c de l'élément 12. Une troisième portion T18 de la tige d'actionnement 18 est ainsi définie entre la collerette 18i et la deuxième extrémité 18b de la tige d'actionnement 18. La tige d'actionnement 18 comporte ainsi, entre ses première et deuxième extrémités 18a, 18b, le premier écrou d'entraînement 18e, puis la première gorge de rupture 18f, le deuxième écrou d'entraînement 18g, puis la deuxième gorge de rupture 18h, la collerette 18i, la portion filetée 18c, puis la douille de déformation 18d. Le premier écrou d'entraînement 18e, la première gorge de rupture 18f, le deuxième écrou d'entraînement 18g, la deuxième gorge de rupture 18h et la collerette 18i sont agencés en continuité les uns aux autres. A l'exception de la collerette 18i et des première et deuxième gorges de rupture 18f, 18h, la tige d'actionnement 18 présente un diamètre sensiblement constant, égal au diamètre intérieur du manchon 20. La tige d'actionnement 18 est montée avec peu de jeu dans le manchon 20, c'est-à-dire avec un jeu suffisant pour permettre un vissage de la tige d'actionnement 18 dans le manchon 20.

Le manchon 20 comporte un corps cylindrique creux s'étendant longitudinalement selon l'axe longitudinal A et définissant un orifice 20h traversant. Le manchon 20 présente une première extrémité 20a agencée du côté accessible de l'assemblage et une deuxième extrémité 20b opposée à la première extrémité 20a et agencée du côté inaccessible de l'assemblage lorsque le manchon 20 est placé dans les orifices 12c, 14c des éléments 12, 14 à assembler. Le manchon 20 comporte une collerette 20c sensiblement annulaire à sa première extrémité 20a. La collerette 20c a une forme extérieure sensiblement complémentaire à la forme de l'élargissement 12d de l'orifice 12c de l'élément 12, et une forme intérieure sensiblement complémentaire à la forme de la collerette 18i de la tige d'actionnement 18. Le manchon 20 comporte également une douille de déformation 20d à sa deuxième extrémité 20b, qui prend ici la forme d'un taraudage. Le manchon 20 comporte une portion déformable 20e, agencée entre la douille de déformation 20d et la collerette 20c, à distance des première et deuxième extrémités 20a, 20b du manchon 20. Le manchon 20 comporte également une portion taraudée 20g agencée entre la douille de déformation 20d et la portion déformable 20e. Le manchon 20 comporte ainsi, entre ses première et deuxième extrémités 20a, 20b, et dans cet ordre, la collerette 20c, la portion déformable 20e, la portion taraudée 20g et la douille de déformation 20d. Bien que non représenté sur les figures, le manchon pourrait comporter, dans cet ordre, entre ses première et deuxième extrémités, la collerette, la portion filetée, la portion déformable et la douille de déformation.

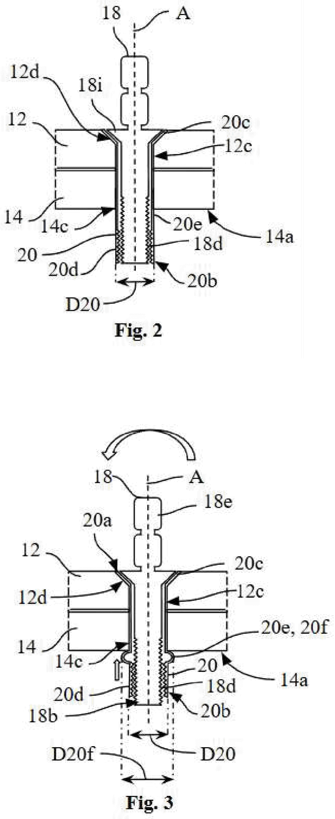

Comme représenté sur la Figure 2, après installation du manchon 20 dans les orifices 12c, 14c des éléments 12, **14,** la collerette 20c du manchon 20 vient en appui contre l'élargissement 12d de l'orifice 12c du premier élément 12 de l'assemblage. La deuxième extrémité 20b du manchon 20, et notamment la portion déformable 20e et la douille de déformation 20d du manchon 20 dépassent au-delà de l'orifice 14c du deuxième élément **14** de l'assemblage, c'est-à-dire s'étendent au-delà de la première face 14a du deuxième élément 14. Le diamètre extérieur D20 du manchon 20 est sensiblement égal au diamètre intérieur des orifices 12c, 14c des éléments 12, 14. Le manchon 20 est ainsi monté sans jeu dans les orifices 12c, 14c des éléments 12, 14. En particulier, le diamètre extérieur de la collerette 20c du manchon 20 est sensiblement égal au diamètre intérieur de l'élargissement 12d de l'orifice 12c du premier élément 12. Et le diamètre extérieur du corps du manchon 20 est sensiblement égal au diamètre intérieur des orifices 12c, 14c des premier et deuxième éléments 12, 14.

La collerette 18i de la tige d'actionnement 18 est en appui contre la surface intérieure de la collerette 20c annulaire du manchon 20. La deuxième extrémité 18b de la tige d'actionnement 18, et notamment la douille de déformation 18d de la tige d'actionnement 18, dépasse au-delà de l'orifice 14c du deuxième élément 14 de l'assemblage, c'est-à-dire s'étend au-delà de la première face 14a du deuxième élément 14. La douille de déformation 18d de la tige d'actionnement 18 est agencée en regard de la douille de déformation 20d du manchon 20.

Après insertion du dispositif de fixation aveugle 10, la tige d'actionnement 18, le manchon 20 et les orifices 12c, 14c des premier et deuxième éléments 12, 14 sont coaxiaux selon l'axe longitudinal A. Comme représenté sur la figure 2, une fois le dispositif de fixation aveugle 10 installé dans les orifices 12c, 14c des premier et deuxième éléments 12, 14, les première et deuxième portions P18, D18 de la tige d'actionnement 18 font saillie par rapport à la première face 12a du premier élément 12, et la portion déformable 20e, la douille de déformation 20d du manchon 20 ainsi que la douille de déformation 18d de la tige d'actionnement 18 font saillie par rapport à la première face 14a du deuxième élément 14. Ainsi, les première et deuxième portions P18, D18 de la tige d'actionnement 18 sont situées du côté accessible de l'assemblage, tandis que les douilles de déformation 18d, 20d sont situées du côté inaccessible de l'assemblage.

Afin de fixer ensemble les premier et deuxième éléments 12, 14, et comme représenté sur la Figure 3, la tige d'actionnement 18 est mise en rotation par rapport au manchon 20. Plus précisément, la tige d'actionnement 18 est mise en rotation via le premier écrou d'entraînement 18e, au moyen d'un outil de serrage (non représenté sur les figures) manipulé par un opérateur, par rapport au manchon 20. Le filetage de la douille de déformation 18d coopère avec le taraudage de la douille de déformation 20d, ce qui a pour conséquence d'entraîner la deuxième extrémité du manchon 20 en direction de l'assemblage, le long de l'axe longitudinal A. La douille de déformation 20d du manchon 20 est commandée dans son déplacement par le vissage de la tige d'actionnement 18, et plus précisément par le vissage de la douille de déformation 18d de la tige d'actionnement 18. La deuxième extrémité 20b du manchon 20 se retrouve donc à une plus faible distance de la première face 14a du deuxième élément 14 après déformation du manchon 20, tandis que la deuxième extrémité 18b de la tige d'actionnement 18 reste à la même distance de la première face 14a du deuxième élément 14 avant et après déformation du manchon 20. La première extrémité 20a du manchon 20 étant maintenu en appui contre l'élargissement 12d de l'orifice 12c du premier élément 12, une force de compression s'exerce sur le manchon 20, entre la collerette 20c à la première extrémité 20a du manchon 20 et la douille de déformation 20d à la deuxième extrémité 20b du manchon 20, de sorte que la portion déformable 20e du manchon 20 se déforme sous l'effort appliqué par le vissage de la tige d'actionnement 18 dans le manchon 20, et forme un bulbe de déformation 20f. Le bulbe de déformation 20f forme une expansion radiale du manchon 20. La portion déformable 20e du manchon 20 est commandée dans son expansion par le vissage de la tige d'actionnement 18 dans le manchon 20, et plus précisément par le vissage de la douille de déformation 18d de la tige d'actionnement 18 dans la douille de déformation 20d du manchon 20. La portion déformable 20e du manchon est conformée pour être la portion du manchon 20 qui soit la première à se déformer en cas d'effort de compression supérieur à un seuil prédéterminé appliqué longitudinalement selon l'axe longitudinal A sur le manchon 20. La portion déformable 20e du manchon 20 peut, de façon non limitative, présenter une épaisseur plus faible que le reste du manchon 20, de manière à rendre cette portion du manchon primo-déformable suite à un effort de compression (c'est-à-dire qui se déforme en priorité). La portion déformable 20e ainsi déformée s'appuie contre la première face 14a du deuxième élément 14 de l'assemblage. Le bulbe de déformation 20f présente un diamètre extérieur D20f supérieur au diamètre extérieur D20 du manchon 20 non déformé. Ce diamètre extérieur D20f est supérieur au diamètre de l'orifice 14c du deuxième élément 14, de sorte que le bulbe de déformation 20f vienne en appui contre la première face 14a du deuxième élément 14. Les éléments 12, 14 de l'assemblage sont maintenus l'un contre l'autre entre la collerette 20c et le bulbe de déformation 20f du manchon 20.

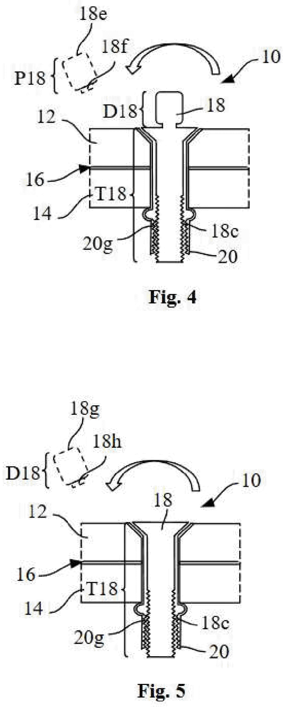

Afin d'assurer un serrage correct de la tige d'actionnement 18 dans le manchon 20, la première gorge de rupture 18f est calibrée pour se rompre dès qu'un premier couple de serrage prédéterminé est appliqué sur le premier écrou d'entraînement 18e. Ce premier couple de serrage prédéterminé correspond au serrage nécessaire et suffisant pour permettre le maintien d'une pression prédéterminée sur le joint d'étanchéité d'interface 16 de l'assemblage. Ainsi, lorsque le couple de serrage appliqué sur la tige d'actionnement 18 (sur le premier écrou d'entraînement 18e) dépasse le premier couple de serrage prédéterminé, cela signifie que le dispositif de fixation aveugle 10 est correctement installé pour assurer le pressage du joint d'étanchéité d'interface 16 entre les premier et deuxième éléments 12, 14. Comme représenté sur la Figure 4, la tige d'actionnement 18, et notamment le premier écrou d'entraînement 18e, est mise en rotation, au moyen d'un outil de serrage (non représenté sur les figures) manipulé par un opérateur, par rapport au manchon 20, jusqu'à ce que la gorge de rupture 18f se rompe. Lors de cette mise en rotation de la tige d'actionnement 18, la portion filetée 18c de la tige d'actionnement 18 coopère avec la portion taraudée 20g du manchon 20. En effet, pour la formation du bulbe de déformation 20f, et donc lors de la déformation de la portion déformable 20e, c'est la douille de déformation 18d de la tige d'actionnement 18 qui coopère avec la douille de déformation 20d du manchon 20; mais une fois le bulbe de déformation 20f formé, c'est la coopération de la portion filetée 18c de la tige d'actionnement 18 avec la portion taraudée 20g du manchon 20 qui permet de définir le couple de serrage à appliquer sur le premier écrou d'entraînement 18e avant rupture de la première gorge de rupture 18f. La première portion P18 de la tige d'actionnement 18, c'est-à-dire le premier écrou d'entraînement 18e et la première gorge de rupture 18f, est donc retirée du dispositif de fixation aveugle 10, et la tige d'actionnement 18 ne conserve donc que sa deuxième portion D18 et sa troisième portion T18. Afin d'assurer un re-serrage correct de la tige d'actionnement 18 dans le manchon 20, la deuxième gorge de rupture 18h est calibrée pour se rompre dès qu'un deuxième couple de serrage prédéterminé est appliqué sur le deuxième écrou d'entraînement 18g. Ce deuxième couple de serrage prédéterminé correspond au serrage nécessaire et suffisant pour permettre une précharge correcte du dispositif de fixation aveugle 10. Ainsi, lorsque le couple de serrage appliqué sur la tige d'actionnement 18, plus précisément sur le deuxième écrou d'entraînement 18g, dépasse le deuxième couple de serrage prédéterminé, cela signifie que le dispositif de fixation aveugle 10 est correctement et définitivement installé pour assurer la précharge du dispositif de fixation aveugle 10. Comme représenté sur la Figure 5, la tige d'actionnement 18, et notamment le deuxième écrou d'entraînement 18g, est mise en rotation, au moyen d'un outil de serrage (non représenté sur les figures) manipulé par un opérateur, par rapport au manchon 20, jusqu'à ce que la gorge de rupture 18h se rompe. Lors de cette mise en rotation de la tige d'actionnement 18 en vue du re-serrage du dispositif de fixation aveugle 10, la portion filetée 18c de la tige d'actionnement 18 coopère avec la portion taraudée 20g du manchon 20. La deuxième portion D18 de la tige d'actionnement 18, c'est-à-dire le deuxième écrou d'entraînement 18g et la deuxième gorge de rupture 18h, est donc retirée du dispositif de fixation aveugle 10, et la tige d'actionnement 18 ne conserve donc que sa troisième portion T18.

Le premier couple de serrage prédéterminé est inférieur au deuxième couple de serrage prédéterminé, de sorte que la première gorge de rupture 18f se rompt avant la deuxième gorge de rupture 18h. Le couple de serrage à appliquer pour assurer le pressage du joint d'étanchéité 16 est ainsi inférieur au couple de serrage à appliquer pour assurer la précharge du dispositif de fixation aveugle 10.

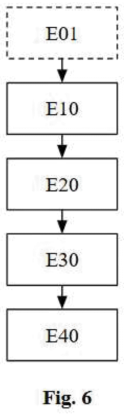

Le procédé d'installation d'un dispositif de fixation aveugle 10 d'une façon définitive est illustré sur la Figure 6.

Au préalable, ce procédé comporte une étape E01 d'application d'un joint d'étanchéité d'interface 16 entre les premier et deuxième éléments 12, 14 à assembler.

Les étapes suivantes du procédé permettent un pressage correct du joint d'étanchéité d'interface 16 entre les premier et deuxième éléments 12, 14 à assembler, de manière à ce que le joint d'étanchéité d'interface 16 soit d'une épaisseur constante entre lesdits éléments 12, 14.

Le procédé comporte une étape E10 d'insertion du dispositif de fixation aveugle 10 dans les orifices 12c, 14c coaxiaux des premier et deuxième éléments 12, 14 destinés à être assemblés. Plus précisément, le manchon 20, dans lequel la tige d'actionnement 18 a été préalablement insérée, est inséré dans les orifices 12c, 14c des premier et deuxième éléments 12, 14. De manière générale, la tige d'actionnement 18 est insérée dans le manchon 20, préalablement à l'installation du dispositif de fixation aveugle 10. Bien entendu, le manchon 20 pourrait être tout d'abord inséré dans les orifices 12c, 14c des premier et deuxième éléments 12, 14 sans que la tige d'actionnement 18 ne soit enfilée dans le manchon 20, puis la tige d'actionnement 18 pourrait être insérée à son tour dans l'orifice 20h du manchon 20.

Le manchon 20 est inséré dans l'orifice 12c du premier élément 12 à assembler, à partir de la première face 12a de l'élément 12, par sa deuxième extrémité 20b. Le manchon 20 est, en suivant, inséré dans l'orifice 14c du deuxième élément 14 qui est coaxial avec l'orifice 12c du premier élément 12. La deuxième extrémité 20b du manchon 20 débouche au-delà de la première face 14a du deuxième élément 14. La collerette 20c du manchon 20, arrangée à la première extrémité 20a du manchon 20, vient en appui contre l'élargissement 12d de l'orifice 12c du premier élément 12. Le manchon 20 est ajusté dans les orifices 12c, 14c des premier et deuxième éléments 12, 14, c'est-à-dire que le manchon 20 est monté sans jeu dans lesdits orifices 12c, 14c.

Le dispositif de fixation aveugle 10 étant en position dans les orifices 12c, 14c des éléments 12, 14, la deuxième extrémité 18b de la tige d'actionnement 18 affleure la deuxième extrémité 20b du manchon 20. La collerette 18i de la tige d'actionnement 18 est en appui contre la collerette 20c du manchon 20. La douille de déformation 18d de la tige d'actionnement 18 est disposée en regard de la douille de déformation 20d du manchon 20. La tige d'actionnement 18 est montée avec un faible jeu dans l'orifice 20h du manchon 20, de manière à permettre un vissage de la tige d'actionnement 18 dans le manchon 20.

Le procédé comporte ensuite une étape E20 de déformation de la portion déformable 20e du manchon 20 résultant de la coopération de la douille de déformation 18d de la tige d'actionnement 18 avec la douille de déformation 20d du manchon 20. Cette étape E20 de déformation permet de fixer le dispositif de fixation aveugle 10 aux premier et deuxième éléments 12, 14.

L'étape E20 comporte ici une sous-étape de vissage de la douille de déformation 18d filetée de la tige d'actionnement 18 dans la douille de déformation 20d taraudée du manchon 20, ce qui a pour conséquence d'entraîner la deuxième extrémité 20b du manchon 20 en direction de sa première extrémité 20a. Le manchon 20 étant maintenu par sa collerette 20c contre la première face 12a du premier élément 12, cela entraîne une compression du manchon 20, et en particulier une compression de la portion déformable 20e du manchon 20 contre la première face 14a du deuxième élément 14. La portion déformable 20e étant conformée pour se déformer suite à l'application d'un effort de compression supérieur à un seuil prédéterminé, lorsque ce seuil prédéterminé est dépassé suite au vissage de la tige d'actionnement 18 dans le manchon 20, cela entraîne une déformation de la portion déformable 20e, et la création de la portion déformée 20f du manchon 20. Le vissage de la douille de déformation 18d filetée de la tige d'actionnement 18 dans la douille de déformation 20d taraudée du manchon 20 permet d'agencer la portion filetée 18c de la tige d'actionnement 18 en regard de la portion taraudée 20g du manchon 20.

Le procédé comprend ensuite une étape E30 de vissage de la tige d'actionnement 18 dans le manchon 20, et plus précisément un vissage de la portion filetée 18c de la tige d'actionnement 18 dans la portion taraudée 20g du manchon 20, via le premier écrou d'entraînement 18e, jusqu'à ce que la première gorge de rupture 18f se rompt. Plus précisément, un opérateur, au moyen d'un outil de serrage (non représenté sur les figures), va visser le premier écrou d'entraînement 18e dans le manchon 20, c'est-à-dire appliquer un couple de serrage sur le premier écrou d'entraînement 18e par rapport au manchon 20, jusqu'au cisaillement de la première gorge de rupture 18f. La rupture de la première gorge de rupture 18f signifie que le dispositif de fixation aveugle 10 est suffisamment serré sur l'assemblage des premier et deuxième éléments 12, 14 pour maintenir une pression adéquate sur le joint d'étanchéité d'interface 16.

L'étape suivante du procédé est réalisée après pressage, fluage et séchage du joint d'étanchéité d'interface 16, et permet une précharge correcte du dispositif de fixation aveugle 10.

Le procédé comporte ensuite une étape E40 de re-serrage de la tige d'actionnement 18 dans le manchon 20, et plus précisément un vissage de la portion filetée 18c de la tige d'actionnement 18 dans la portion taraudée 20g du manchon 20, via le deuxième écrou d'entraînement 18g, jusqu'à ce que la deuxième gorge de rupture 18h se rompt. Plus précisément, un opérateur, au moyen d'un outil de serrage (non représenté sur les figures), va visser le deuxième écrou d'entraînement 18g dans le manchon 20, c'est-à-dire appliquer un couple de serrage sur le deuxième écrou d'entraînement 18g par rapport au manchon 20, jusqu'au cisaillement de la deuxième gorge de rupture 18h. La rupture de la deuxième gorge de rupture 18h signifie que le dispositif de fixation aveugle 10 est suffisamment serré sur l'assemblage des premier et deuxième éléments 12, 14 pour assurer une précharge du dispositif de fixation aveugle 10.

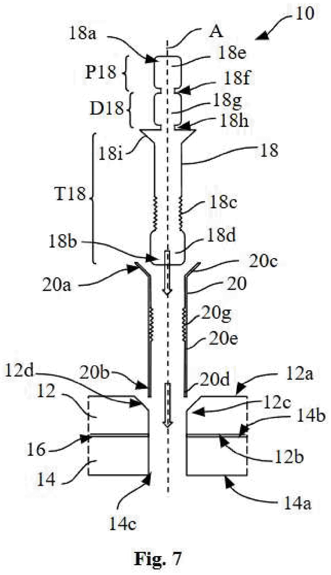

Les Figures 7 à 10 représentent l'installation d'un deuxième type de fixation aveugle pour fixer ensemble les éléments d'une structure d'un aéronef: un dispositif de fixation aveugle par traction et serrage, dit dispositif de fixation aveugle "à tirer". Seules les différences entre les premier et deuxième types de fixation aveugle sont décrites par la suite pour des raisons de clarté. Les caractéristiques non décrites du premier type de fixation aveugle s'appliquent donc également pour ce deuxième type de fixation aveugle.

Le dispositif de fixation aveugle 10 comporte une tige d'actionnement 18, ici une tige de traction, destinée à être insérée dans le manchon 20.

La tige d'actionnement 18 comporte une douille de déformation 18d à sa deuxième extrémité 18b. Ici, la douille de déformation 18d prend la forme d'une excroissance radiale (par rapport à l'axe longitudinal A). A l'exception de la collerette 18i, des première et deuxième gorges de rupture 18f, 18h, et de la douille de déformation 18d, la tige d'actionnement 18 présente un diamètre sensiblement constant, égal au diamètre intérieur du manchon 20. Ainsi, le diamètre de la douille de déformation 18d est supérieur au diamètre intérieur du manchon 20.

Le manchon 20 comporte une douille de déformation 20d à sa deuxième extrémité 20b, qui prend ici la forme d'une expansion radiale. Le manchon 20 comporte également une portion taraudée 20g agencée entre la collerette 20c et la portion déformable 20e. Le manchon 20 comporte ainsi, entre ses première et deuxième extrémités 20a, 20b, et dans cet ordre, la collerette 20c, la portion taraudée 20g, la portion déformable 20e et la douille de déformation 20d.

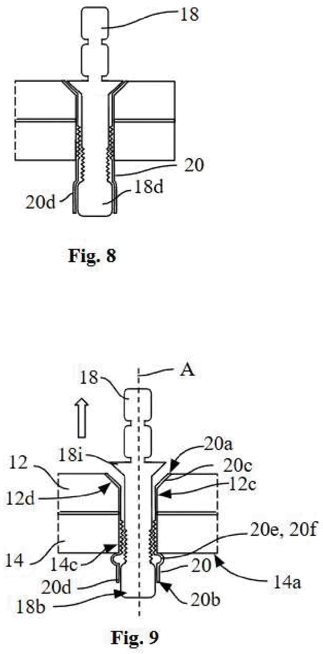

Comme représenté sur la Figure 8, la douille de déformation 18d de la tige d'actionnement 18 ayant un diamètre supérieur au diamètre intérieur du manchon 20, la douille de déformation 18d de la tige d'actionnement 18 déforme le manchon 20 au niveau de sa douille de déformation 20d. La douille de déformation 20d du manchon 20 prend la forme d'une excroissance, c'est-à-dire d'une expansion radiale. La douille de déformation 18d de la tige d'actionnement 18 déforme localement le manchon 20 et crée une expansion radiale locale du manchon 20 en regard de la douille de déformation 18d de la tige d'actionnement 18.

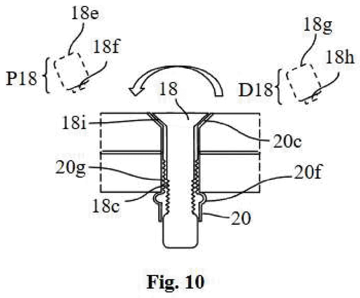

Afin de fixer ensemble les premier et deuxième éléments 12, 14, et comme représenté sur la Figure 9, la tige d'actionnement 18 est mise en translation par rapport au manchon 20, le manchon 20 étant maintenu dans les orifices 12c, 14c des éléments 12, 14. Plus précisément, la tige d'actionnement 18 est tirée selon l'axe longitudinal A par rapport au manchon 20, dans une direction opposée au manchon 20. La collerette 18i de la tige d'actionnement 18 n'est alors plus en appui contre la collerette 20c du manchon, et se retrouve à distance de la collerette 20c du manchon. Cette traction de la tige d'actionnement 18 a pour conséquence d'entraîner une portion du manchon 20 comportant la deuxième extrémité 20b du manchon 20 en direction de l'assemblage, le long de l'axe longitudinal A. La deuxième extrémité 20b du manchon 20 et la deuxième extrémité 18b de la tige d'actionnement 18 se retrouvent à une plus faible distance de la première face 14a du deuxième élément 14 après déformation du manchon 20. La première extrémité 20a du manchon 20 étant maintenu en appui contre l'élargissement 12d de l'orifice 12c du premier élément 12, la traction de la tige d'actionnement 18 a pour conséquence qu'une force de compression s'exerce entre les première et deuxième extrémités 20a, 20b du manchon 20, de sorte que la portion déformable 20e du manchon 20 se déforme sous l'effort appliqué par la traction de la tige d'actionnement 18 par rapport au manchon 20, et forme un bulbe de déformation 20f qui bloque le manchon 20 en appui contre la première face 14a du premier élément 14. La portion déformable 20e du manchon 20 est commandée dans son expansion radiale par la traction de la tige d'actionnement 18 par rapport au manchon 20, et plus précisément par la traction de la douille de déformation 18d de la tige d'actionnement 18 par rapport à la douille de déformation 20d du manchon 20. La traction de la tige d'actionnement 18 a également permis d'agencer la portion filetée 18c de la tige d'actionnement 18 en regard de la portion taraudée 20g du manchon 20. Une fois le bulbe de déformation 20f formé, et comme représenté sur la Figure 10, la tige d'actionnement 18, et notamment le premier écrou d'entraînement 18e, est mise en rotation, au moyen d'un outil de serrage (non représenté sur les figures) manipulé par un opérateur, par rapport au manchon 20, jusqu'à ce que la collerette 18i de la tige d'actionnement 18 vienne en appui contre la collerette 20c du manchon 20. Lors de cette mise en rotation de la tige d'actionnement 18, la portion filetée 18c de la tige d'actionnement 18 coopère avec la portion taraudée 20g du manchon 20.

Le procédé d'installation de ce deuxième type de dispositif de fixation aveugle 10 diffère du procédé d'installation du premier type de dispositif de fixation aveugle en ce que:
- lors de l'étape E10 d'insertion du dispositif de fixation aveugle 10 dans les orifices 12c, 14c des premier et deuxième éléments 12, 14 destinés à être assemblés, la douille de déformation 18d de la tige d'actionnement 18 déforme le manchon 20 au niveau de sa douille de déformation 20d.
- l'étape E20 de déformation de la portion déformable 20e du manchon 20 comporte ici une sous-étape de traction de la tige d'actionnement 18 par rapport au manchon 20, ce qui a pour conséquence d'entraîner la deuxième extrémité 20b du manchon 20 en direction de sa première extrémité 20a. Le manchon 20 étant maintenu par sa collerette 20c contre la première face 12a du premier élément 12, la traction de la douille de déformation 18d formant une excroissance radiale de la tige d'actionnement 18 dans la douille de déformation 20d formant une expansion radiale du manchon 20 permet d'entraîner une compression du manchon 20, et en particulier une compression de la portion déformable 20e du manchon 20 contre la première face 14a du deuxième élément 14. La portion déformable 20e étant conformée pour se déformer suite à l'application d'un effort de compression supérieur à un seuil prédéterminé, lorsque ce seuil prédéterminé est dépassé suite à la traction de la tige d'actionnement 18 par rapport au manchon 20, cela entraîne une déformation de la portion déformable 20e, et la création de la portion déformée 20f du manchon 20.

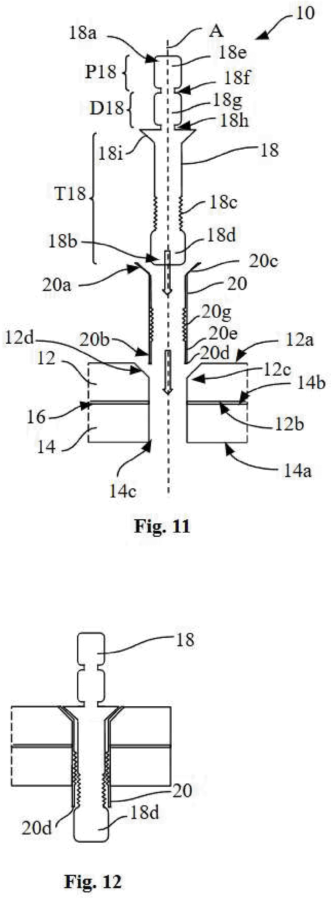

Les Figures 11 à 13 représentent l'installation d'un autre deuxième type de fixation aveugle par traction et serrage.

Le manchon 20 comporte une douille de déformation 20d à sa deuxième extrémité 20b, qui prend ici la forme d'une surface d'appui. La portion déformable 20e du manchon 20 est agencée à sa deuxième extrémité 20b.

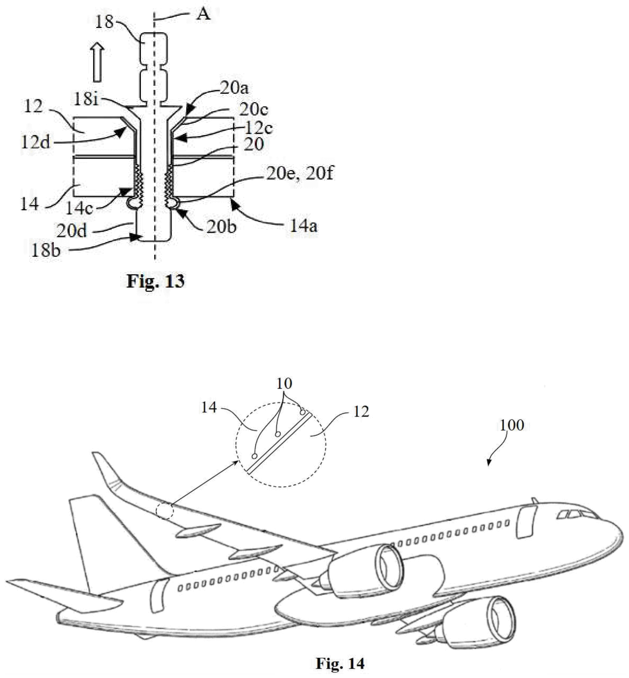

Comme représenté sur la Figure 12, après installation de la tige d'actionnement 18 dans le manchon 20, la douille de déformation 18d de la tige d'actionnement 18 dépasse au-delà de la deuxième extrémité 20b du manchon 20. La douille de déformation, 18d de la tige d'actionnement 18 ayant un diamètre supérieur au diamètre intérieur du manchon 20, et la tige d'actionnement 18 faisant saillie par rapport au manchon 20, la douille de déformation 18d de la tige d'actionnement 18 vient en appui contre la douille de déformation 20d du manchon 20. Afin de fixer ensemble les premier et deuxième éléments 12, 14, et comme représenté sur la Figure 13, la tige d'actionnement 18 est mise en translation par rapport au manchon 20, le manchon 20 étant maintenu dans les orifices 12c, 14c des éléments 12, 14. Plus précisément, la tige d'actionnement 18 est tirée selon l'axe longitudinal A par rapport au manchon 20, dans une direction opposée au manchon 20. Cette traction de la tige d'actionnement 18 a pour conséquence d'entraîner une portion du manchon 20 comportant la deuxième extrémité 20b du manchon 20 en direction de l'assemblage, le long de l'axe longitudinal A. La première extrémité 20a du manchon 20 étant maintenu en appui contre l'élargissement 12d de l'orifice 12c du premier élément 12, la traction de la tige d'actionnement 18 a pour conséquence qu'une force de compression s'exerce entre les première et deuxième extrémités 20a, 20b du manchon 20, de sorte que la portion déformable 20e du manchon 20, située à la deuxième extrémité 20b du manchon 20, se déforme sous l'effort appliqué par la traction de la tige d'actionnement 18 par rapport au manchon 20, et forme un bulbe de déformation 20f qui bloque le manchon 20 en appui contre la première face 14a du premier élément 14. La portion déformable 20e du manchon 20 est commandée dans son expansion radiale par la traction de la tige d'actionnement 18 par rapport au manchon 20, et plus précisément par la traction de la douille de déformation 18d de la tige d'actionnement 18 contre la douille de déformation 20d du manchon 20.

Le procédé d'installation de ce troisième type de dispositif de fixation aveugle 10 diffère du procédé d'installation du deuxième type de dispositif de fixation aveugle en ce que:
- lors de l'étape E10 d'insertion du dispositif de fixation aveugle 10 dans les orifices 12c, 14c des premier et deuxième éléments 12, 14 destinés à être assemblés, la douille de déformation 18d de la tige d'actionnement 18 vient en appui contre la douille de déformation 20d du manchon 20.
- l'étape E20 de déformation de la portion déformable 20e du manchon 20 comporte ici une sous-étape de traction de la tige d'actionnement 18 par rapport au manchon 20, ce qui a pour conséquence d'entraîner la deuxième extrémité 20b du manchon 20 en direction de sa première extrémité 20a. Le manchon 20 étant maintenu par sa collerette 20c contre la première face 12a du premier élément 12, la traction de la douille de déformation 18d formant une excroissance radiale de la tige d'actionnement 18 contre la douille de déformation 20d du manchon 20 formant une surface d'appui permet d'entraîner une compression du manchon 20, et en particulier une compression de la portion déformable 20e du manchon 20 contre la première face 14a du deuxième élément 14. La portion déformable 20e étant conformée pour se déformer suite à l'application d'un effort de compression supérieur à un seuil prédéterminé, lorsque ce seuil prédéterminé est dépassé suite à la traction de la tige d'actionnement 18 par rapport au manchon 20, cela entraîne une déformation de la portion déformable 20e, et la création de la portion déformée 20f du manchon 20.

Un aéronef 100 comprenant un assemblage d'un premier élément 12 et d'un deuxième élément 14 par des dispositifs de fixation aveugle 10 selon l'invention a été représenté sur la Figure 14. Le dispositif de fixation aveugle selon l'invention a été décrit pour la fixation de deux éléments d'un aéronef, mais peut bien entendu être utilisé pour fixer ensemble plus de deux éléments sans sortir du cadre de l'invention. En outre, les éléments à assembler peuvent être différents types de pièces d'un aéronef à assembler, comme par exemple, et de manière non limitative, des pièces de structure, des pièces de plancher, des pièces de cabine, des pièces de réservoir d'un aéronef.

## Revendications

1. Dispositif de fixation aveugle (10) pour la fixation d'un assemblage d'un premier élément (12) avec un deuxième élément (14), un joint d'étanchéité d'interface (16) étant disposé entre lesdits premier et deuxième éléments (12, 14), lesdits premier et deuxième éléments (12, 14) comprenant chacun un orifice (12c, 14c) présentant un premier diamètre intérieur, ledit dispositif de fixation aveugle (10) comprenant:
- une tige d'actionnement (18) présentant des première et deuxième extrémités (18a, 18b), et comprenant un premier écrou d'entraînement (18e) à sa première extrémité (18a), une première gorge de rupture (18f) entre le premier écrou d'entraînement (18e) et sa deuxième extrémité (18b), une portion filetée (18c) entre la première gorge de rupture (18f) et sa deuxième extrémité (18b), et une douille de déformation (18d) au niveau de sa deuxième extrémité (18b),
- un manchon (20) apte à être inséré dans les orifices (12c, 14c) desdits premier et deuxième éléments (12, 14), et présentant un premier diamètre extérieur (D20) sensiblement égal au premier diamètre intérieur, le manchon (20) étant apte à être enfilé sur la tige d'actionnement (18), et présentant des première et deuxième extrémités (20a, 20b), et comprenant une portion taraudée (20g) entre ses première et deuxième extrémités (20a, 20b), une douille de déformation (20d) à sa deuxième extrémité (20b) et une portion déformable (20e) entre ses première et deuxième extrémités (20a, 20b) configurée pour se déformer radialement jusqu'à ce que le manchon (20) présente un deuxième diamètre extérieur (D20f) supérieur au premier diamètre extérieur (D20) lorsque la douille de déformation (18d) de la tige d'actionnement (18) coopère avec la douille de déformation (20d) du manchon (20),
dans lequel ladite première gorge de rupture (18f) est configurée pour se rompre lorsqu'un couple de serrage appliqué sur le premier écrou d'entraînement (18e) entraînant la coopération de la portion filetée (18c) de la tige d'actionnement (18) avec la portion taraudée (20g) du manchon (20) dépasse un premier couple prédéterminé, **caractérisé en ce que** la tige d'actionnement (18) comprend un deuxième écrou d'entraînement (18g) suivi d'une deuxième gorge de rupture (18h) entre la première gorge de rupture (18f) et la portion filetée (18c), ladite deuxième gorge de rupture (18h) étant configurée pour se rompre lorsqu'un couple de re-serrage appliqué sur le deuxième écrou d'entraînement (18g) dépasse un deuxième couple prédéterminé supérieur audit premier couple prédéterminé.

2. Dispositif de fixation aveugle (10) selon la revendication 1, **caractérisé en ce que** la douille de déformation (18d) de la tige d'actionnement (18) prend la forme d'un filetage et **en ce que** la douille de déformation (20d) du manchon (20) prend la forme d'un taraudage.

3. Dispositif de fixation aveugle (10) selon la revendication 1, **caractérisé en ce que** la douille de déformation (18d) de la tige d'actionnement (18) prend la forme d'une excroissance radiale et **en ce que** la douille de déformation (20d) du manchon (20) prend la forme d'une expansion radiale.

4. Dispositif de fixation aveugle (10) selon la revendication 1, **caractérisé en ce que** la douille de déformation (18d) de la tige d'actionnement (18) prend la forme d'une excroissance radiale et **en ce que** la douille de déformation (20d) du manchon (20) prend la forme d'une surface d'appui contre laquelle s'appuie la douille de déformation (18d) de la tige d'actionnement (18).

5. Procédé d'installation d'un dispositif de fixation aveugle (10) selon l'une des revendications précédentes pour la fixation de l'assemblage du premier élément (12) avec le deuxième élément (14), comprenant:
- une étape (E10) d'insertion du dispositif de fixation aveugle (10) dans les orifices (12c, 14c) des premier et deuxième éléments (12, 14),
- une étape (E20) de coopération de la douille de déformation (18d) de la tige d'actionnement (18) avec la douille de déformation (20d) du manchon (20) de manière à déformer radialement la portion déformable (20e) du manchon (20) jusqu'à ce que le manchon (20) présente un deuxième diamètre extérieur (D20f) supérieur au premier diamètre extérieur (D20), et la coopération de la douille de déformation (18d) de la tige d'actionnement (18) avec la douille de déformation (20d) du manchon (20) permettant d'agencer la portion filetée (18c) de la tige d'actionnement (18) en regard de la portion taraudée (20g) du manchon (20),
- une étape (E30) de vissage de la portion filetée (18c) de la tige d'actionnement (18) dans la portion taraudée (20g) du manchon (20), via le premier écrou d'entraînement (18e), jusqu'à rupture de la première gorge de rupture (18f),
**caractérisé en ce que** le procédé comprend également:
- une étape (E40) de re-serrage de la portion filetée (18c) de la tige d'actionnement (18) dans la portion taraudée (20g) du manchon (20), via le deuxième écrou d'entraînement (18g), jusqu'à rupture de la deuxième gorge de rupture (18h).

6. Procédé d'installation d'un dispositif de fixation aveugle (10) selon la revendication 5, dans lequel la douille de déformation (18d) de la tige d'actionnement (18) prend la forme d'un filetage et la douille de déformation (20d) du manchon (20) prend la forme d'un taraudage, et dans lequel l'étape (E20) de coopération de la douille de déformation (18d) de la tige d'actionnement (18) avec la douille de déformation (20d) du manchon (20) comporte une sous-étape de vissage de la douille de déformation (18d) de la tige d'actionnement (18) dans la douille de déformation (20d) du manchon (20) de manière à ce que le filetage de la douille de déformation (18d) de la tige d'actionnement (18) coopère avec le taraudage de la douille de déformation (20d) du manchon (20).

7. Procédé d'installation d'un dispositif de fixation aveugle (10) selon la revendication 5, dans lequel la douille de déformation (18d) de la tige d'actionnement (18) prend la forme d'une excroissance radiale et la douille de déformation (20d) du manchon (20) prend la forme d'une expansion radiale, et dans lequel l'étape (E20) de coopération de la douille de déformation (18d) de la tige d'actionnement (18) avec la douille de déformation (20d) du manchon (20) comporte une sous-étape de traction de la douille de déformation (18d) de la tige d'actionnement (18) dans la douille de déformation (20d) du manchon (20) de manière à ce que l'excroissance radiale de la douille de déformation (18d) de la tige d'actionnement (18) coopère avec l'expansion radiale de la douille de déformation (20d) du manchon (20).

8. Procédé d'installation d'un dispositif de fixation aveugle (10) selon la revendication 5, dans lequel la douille de déformation (18d) de la tige d'actionnement (18) prend la forme d'une excroissance radiale et la douille de déformation (20d) du manchon (20) prend la forme d'une surface d'appui, et dans lequel l'étape (E20) de coopération de la douille de déformation (18d) de la tige d'actionnement (18) avec la douille de déformation (20d) du manchon (20) comporte une sous-étape de traction de la douille de déformation (18d) de la tige d'actionnement (18) dans la douille de déformation (20d) du manchon (20) de manière à ce que l'excroissance radiale de la douille de déformation (18d) de la tige d'actionnement (18) coopère avec la surface d'appui de la douille de déformation (20d) du manchon (20).
